Europäisches Patentamt

European Patent Office

Office européen des brevets

(19)

(11) Veröffentlichungsnummer: **0 191 321**
**A1**

(12) **EUROPÄISCHE PATENTANMELDUNG**

(21) Anmeldenummer: 86100750.8

(22) Anmeldetag: 21.01.86

(51) Int. Cl.⁴: **H02G 15/10**

(30) Priorität: 04.02.85 DE 3503732

(43) Veröffentlichungstag der Anmeldung:
20.08.86 Patentblatt 86/34

(84) Benannte Vertragsstaaten:
AT BE CH DE FR GB IT LI NL SE

(71) Anmelder: **Siemens Aktiengesellschaft Berlin und**
**München**
**Wittelsbacherplatz 2**
**D-8000 München 2(DE)**

(72) Erfinder: **Meltsch, Hans-Jürgen**
**Im Wietloh 18a**
**D-5840 Scherte/Ergste(DE)**
Erfinder: **Rost, Jan**
**Lindemoosweg 15**
**D-8131 Traubing(DE)**
Erfinder: **Behmer, Albin, Dr.**
**Meisenweg 5**
**D-8620 Lichtenfels(DE)**
Erfinder: **Mahler, Ernst**
**Margaretenweg 5**
**D-8620 Lichtenfels(DE)**

(54) **Flammgeschützte Kabelmuffe aus Kunststoff.**

(57) Flammgeschützte Kabelmuffen aus Kunststoff, insbesondere Thermoplasten, weisen erfindungsgemäß eine mehrschichtige, unbrennbare, flexible, metallische Hülle (1, 2) auf.
Vorzugsweise besteht die innenliegende dichte Schicht (2)
aus einer Metallfolie und die außenliegende poröse Schicht
aus einem Metalldrahtgewebe.

Flammgeschützte Kabelmuffe aus Kunststoff

Die Erfindung betrifft eine flammgeschützte Kabelmuffe aus Kunststoff für die Nachrichten- und Energieübertragung.

Kabelmuffen aus Kunststoff, vorzugsweise aus einem Thermoplast für die Nachrichten- und Energieübertragung sind seit langem bekannt. Sie weisen gute mechanische, chemische, elektrische und witterungsbeständige Eigenschaften auf. Ihre Herstellung ist wirtschaftlich und sie weisen Vorzüge in der Weiterverarbeitbarkeit auf. Besonders vorteilhaft erwiesen sich solche aus Polyolefinen.

Aus Kunststoff hergestellte Kabelmuffen werden aber durch äußere Flammeinwirkung leicht zerstört.

Der Erfindung liegt die Aufgabe zugrunde, Kabelmuffen aus Kunststoff, vorzugsweise Thermoplasten für die Nachrichten- und Energieübertragung zu schaffen, die bei äußerer Flammeinwirkung eine Zerstörung der Kabelverbindung verhindern.

Diese Aufgabe wird erfindungsgemäß mit eine Kabelmuffe aus Kunststoff gelöst, die eine unbrennbare, mehrschichtige, flexible, metallische Hülle 1, 2 aufweist. Die mehrschichtige Hülle besteht vorzugsweise aus einer innenliegenden, dichten Schicht, meist einer Metallfolie und einer außenliegenden, mechanisch festen Schicht, vorzugsweise einem Metalldrahtgitter. Solche mehrschichtige Umhüllungen für Kabelmuffen zeichnen sich durch einen hohen Brandschutz bei äußerer Flammeinwirkung aus.

Geeignete Metallfolien sind Kupfer- und Stahlfolien insbesondere Aluminiumfolien mit einer Dicke von 0,05 bis 0,2 mm. Die Metallfolie wirkt flammabsperrend und verhindert, daß durch Hitzeeinwirkung schmelzender Thermoplastformstoff des Muffenkörpers durch die Hülle dringt und außerhalb der Hülle entzündet wird.

Geeignete außenliegende mechanisch feste Schichten können porös sein. Metalldrahtgewebe haben sich besonders bewährt. Sie schützen und fixieren die Metallfolie. Gleichzeitig ermöglicht das Metalldrahtgewebe die Armierung der Metallfolie, indem es die gegen mechanische Belastung empfindliche Metallfolie gegen den durch äußere Flamm- und Hitzeeinwirkung schmelzenden Thermoplastformstoff und die damit verbundene Gasentwicklung schützt.

Besonders bewährt haben sich Metalldrahtgewebe aus verzinktem Stahldraht mit einer Maschenweite von 0,25 mm.

Sofern eine Kabelmuffe gemäß der Erfindung einen Dichtungskörper aus Kunststoff aufweist, wird der Kunststoffdichtungskörper gemäß einer Weiterbildung der Erfindung mit einer Metallfolie beschichtet. In Praxis hat sich eine kunststoffbeschichtete Metallfolie besonders bewährt, die mittels eines heißen Stempels auf den Kunststoffdichtungskörper aufgeschweißt wird.

Die Erfindung wird anhand der Zeichnung näher erläutert.

FIG 1 und 2 zeigen Ansichten von Kabelmuffen mit Aufbruch.

FIG 3 zeigt einen vergrößerten Ausschnitt des Verschlußbereichs.

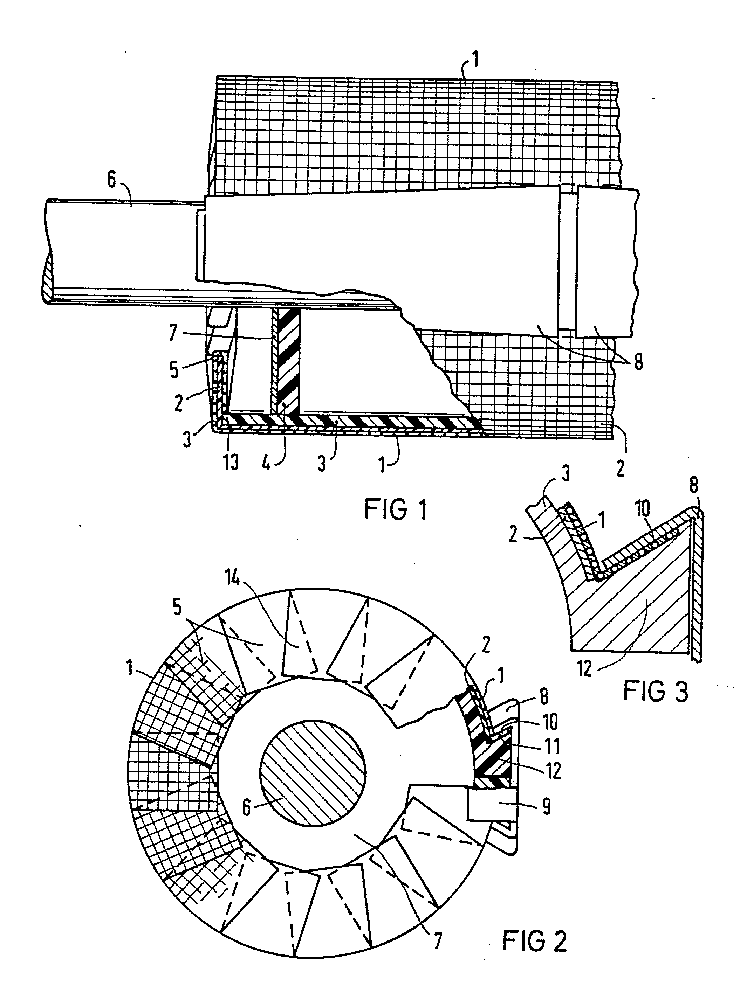

Gemäß einer Ausführung nach FIG 1 ist ein in eine Kabelmuffe 3 eingeführtes Kabel 6 durch einen scheibenförmigen Dichtungskörper 4 fixiert. Die rohrförmige an den Enden offene Kabelmuffe 3 aus einem Thermoplast ist mit einer Metallfolie 2 umhüllt. Darüber ist ein Drahtgewebe 1 gezogen, das fixiert ist. Zum Schließen der Kabelmuffe 3 dient die keilförmige Metallschiene 8. Um die Stirnseiten 13 der Kabelmuffe 3 gegen Flammeinwirkung zu schützen, ist das Drahtgewebe 1 mit der Metallfolie 2 - schürzenartig über die Stirnseite 13 gezogen. (Siehe auch FIG 2). Die Schürze 5 ist zwecks Stabilisierung gefaltet. Das Drahtgewebe 1 umschließt die Metallfolie 2 vollständig. Es ist um die Metallfolie 2 nach innen geklappt. .

Gemäß einer Ausführung nach FIG 2 ist das über der Metallfolie 2 angebrachte Drahtgewebe 1 in die keilförmige Flanke 10 im Verschlußbereich 12 der Kabelmuffe 3 durch Erwärmen eines Stempels 11 eingeschmolzen. 9 ist die Schürze der Metallschiene 8. Die Schürze soll stirnseitig den Verschlußbereich 12 der Kabelmuffe 3 schützen.

FIG 3 veranschaulicht im Verschlußbereich 12 eine vorteilhafte Ausführung für das Fixieren des Drahtgewebes 1 auf einer rohrförmigen Kabelmuffe 3, auf deren Außenfläche eine Metallfolie 2 aufliegt. Das auf der Metallfolie aufliegende Metalldrahtgewebe 1 hat eine Maschenweite von 0,25 mm und ist durch Einschweißen in die keilförmige Flanke 10 fixiert. 8 ist die keilförmige Metallschiene, die über den Verschlußbereich 12 der Kabelmuffe 3 geschoben ist, um die Kabelmuffe 3 zu schließen.

**Ansprüche**

1. Flammgeschütze Kabelmuffe aus Kunststoff für die Nachrichten- und Energieübertragung, **dadurch gekennzeichnet**, daß die Kunststoffkabelmuffe (3) eine unbrennbare, mehrschichtige, flexible, metallische Hülle (1, 2) aufweist.

2. Flammgeschütze Kabelmuffe nach Patentanspruch 1, **dadurch gekennzeichnet**, daß die mehrschichtige Hülle aus einer innenliegenden dichten Schicht (2) und einer außenliegenden mechanisch festen Schicht (1) besteht.

3. Flammgeschützte Kabelmuffe nach Patentanspruch 1 und 2, **dadurch gekennzeichnet**, daß die dichte Schicht eine Metallfolie (2) ist.

4. Flammgeschützte Kabelmuffe nach Patentanspruch 3, **dadurch gekennzeichnet**, daß die Metallfolie (2) aus Aluminium besteht.

5. Flammgeschützte Kabelmuffe nach Patentanspruch 3, **dadurch gekennzeichnet**, daß die Metallfolie eine Dicke von 0,05 bis 0,2 mm aufweist.

6. Flammgeschütze Kabelmuffe nach Patentanspruch 1 bis 5, **dadurch gekennzeichnet**, daß die mechanisch feste Schicht (1) porös ist.

7. Flammgeschütze Kabelmuffe nach Patentanspruch 6, **dadurch gekennzeichnet**, daß die Schicht ein Metalldrahtgewebe (1) ist.

8. flammgeschützte Kabelmuffe nach Patentanspruch 7, **dadurch gekennzeichnet**, daß das Metalldrahtgewebe eine Maschenweite von 0,25 mm hat.

9. Flammgeschützte Kabelmuffe nach den vorangegangenen Ansprüchen, **gekennzeichnet** durch einen mit einer Metallfolie (7) beschichteten Kunstsstoffdichtungskörper (4).

**FIG 1**

**FIG 3**

**FIG 2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | EP-A-0 108 296 (SIEMENS) <br> * Insgesamt * <br><br> ----- | 1-9 | H 02 G 15/10 |

RECHERCHIERTE SACHGEBIETE (Int. Cl.4)

H 02 G
H 01 R

Der vorliegende Recherchenbericht wurde für alle Patentansprüche erstellt.

| Recherchenort <br> DEN HAAG | Abschlußdatum der Recherche <br> 15-05-1986 | Prüfer <br> LOMMEL A. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82